# EUROPEAN PATENT APPLICATION

(11) **EP 3 929 355 A1**
(43) Date of publication of application: **29.12.2021**
(21) Application number: 21180757.3
(22) Date of filing: 22.06.2021
(51) Int. Cl.: D21H 19/38, B32B 27/10, B65D 65/42, D21H 19/40, D21H 19/58, D21H 19/60, D21H 19/82, D21H 27/10

(54) **PAPER MATERIAL AND FLEXIBLE PACKAGING MATERIAL USING THE SAME**

(30) Priority: 23.06.2020 US 202063042570 P
(71) Applicant: Sustainable Carbohydrate Innovation Co., Ltd., Taipei City 10087 (TW)
(72) Inventor: HUANG, Ya-Hui, 10087 Taipei City (TW); YANG, Chien-Yu, 10087 Taipei City (TW); CHENG, Chao-Yu, 10087 Taipei City (TW)
(74) Representative: Becker & Kurig Partnerschaft Patentanwälte PartmbB

(57) **Abstract**

A paper material and a flexible packaging material using the same are provided. At least one surface of the paper material is coated with a first coating layer and a second coating layer. The paper has an air permeability greater than 45200 sec and a dyne value less than 40 dyn/cm. The first coating layer includes an inorganic filler and a first water-based heat-sealable coating, and the first water-based heat-sealable coating includes a polyolefin dispersion, an ethylene acrylic acid copolymer, or a styrene acrylate emulsion. The second coating layer includes an inorganic filler and a second water-based heat-sealable coating, and the second water-based heat-sealable coating includes a polyolefin dispersion, an ethylene acrylic acid copolymer, a styrene acrylate emulsion, or polyvinyl alcohol.

## Description

### BACKGROUND

### Technical Field

The invention relates to a paper material and a flexible packaging material using the same; more particularly, the invention relates to a fluorine-free paper material and a flexible packaging material using the same, which is characterized by water resistance, oil and grease resistance, high gas barrier properties, repulpability, heat sealability, and low surface energy.

### Description of Related Art

The ever-changing forms of packaging materials not only attract the attention of consumers, but also provide protection and ensure ease of circulation for products. The packaging materials have been widely used in food, electronics, medical treatment, daily necessities, and home appliances and are indispensable for commodity circulation. In recent years, with the development of the food industry, highly practical flexible packaging materials have been extensively used in packaging food, but the existing conventional flexible packaging materials can barely be recycled. In consideration of resource recyclability and environmental protection, the development of the flexible packaging materials tends to concentrate in green sustainability and recycling.

Per- and polyfluoroalkyl substances (PFAS) have been widely used in various consumer products and industrial applications (such as flexible packaging materials) due to the unique chemical and physical properties (including oil and grease resistance and low surface energy). The most well-known PFAS includes perfluorooctanoic acid (PFOA) and perfluorooctane sulfonic acid (PFOS). However, the PFAS is a persistent, bio-accumulative, and toxic substance which may lead to serious and irreversible adverse effects on the environment and human health. Accordingly, a number of countries have been precluding the production and use of the PFAS.

In the related art, the Taiwan patent publication no. 201945198 provides a paper barrier material that may serve as a flexible food packaging material, wherein a barrier coating layer includes a flat inorganic pigment A and a flat inorganic pigment B. The flat inorganic pigment A is mica, and the flat inorganic pigment B is kaolin or clay. This publication, however, does not mention the properties of oil and grease resistance nor repulpability. The Taiwan patent publication no. 201927574 provides a paper substrate on which a water vapor barrier layer and a gas barrier layer are sequentially arranged. The water vapor barrier layer includes water vapor barrier resin and a water repellent, the gas barrier layer includes a water-soluble polymer and a surfactant. This publication, however, only teaches the function of blocking water vapor and oxygen. The China patent no. 102177296B provides a coated paper having a multilayer coating including: a first water vapor barrier layer formed of latex, a biopolymer barrier layer, and a second water vapor barrier layer. Although this patent has demonstrated the improved oil and grease resistance properties, oxygen barrier properties, and water vapor barrier properties, the three-layer coating process is cumbersome, and this patent merely teaches the function of blocking water vapor and oxygen.

In view of the above, development of a fluorine-free paper material and a flexible packaging material using the same to avoid serious and irreversible adverse effects on the environment and human health has become a goal to people in the pertinent art, and the paper material should also have water resistance, oil and grease resistance, high gas barrier properties, repulpability, heat sealability, low surface energy, and so on.

### SUMMARY

The invention provides a fluorine-free paper material with a high degree of repulpability after the paper material is applied to manufacture a flexible packaging material, thus achieving recyclability and environmental protection. Moreover, the fluorine-free paper material in the invention also has advantages of water resistance, oil and grease resistance, high gas barrier properties, heat sealability, and low surface energy.

In an embodiment of the invention, a paper material with an air permeability greater than 45200 sec and a dyne value less than 40 dyn/cm is provided.

In an embodiment of the invention, at least one surface of the paper material of the invention is coated with a first coating layer and a second coating layer. The first coating layer includes an inorganic filler and a first water-based heat-sealable coating, and the first water-based heat-sealable coating includes a polyolefin dispersion, an ethylene acrylic acid copolymer, or a styrene acrylate emulsion. The second coating layer includes an inorganic filler and a second water-based heat-sealable coating, and the second water-based heat-sealable coating includes a polyolefin dispersion, an ethylene acrylic acid copolymer, a styrene acrylate emulsion, or polyvinyl alcohol.

In an embodiment of the invention, the paper material has a fiber yield greater than 85%.

In an embodiment of the invention, a coating weight of the first coating layer is 3 g/m² to 20 g/m².

In an embodiment of the invention, a coating weight of the second coating layer is 3 g/m² to 20 g/m².

In an embodiment of the invention, the sum of a coating weight of the first coating layer and the second coating layer is 6 g/m² to 30 g/m².

In an embodiment of the invention, the second coating layer is a pre-coating layer located between the at least one surface of the paper material and the first coating layer.

In an embodiment of the invention, a composition of the first coating layer and a composition of the second coating layer are the same or different.

In an embodiment of the invention, a basis weight of the paper material is 30 g/m² to 200 g/m².

In an embodiment of the invention, the inorganic filler includes calcium carbonate, kaolin, mica, talc, or bentonite.

In an embodiment of the invention, in the first coating layer, a dry weight ratio of the inorganic filler to the first water-based heat-sealable coating is 100:50 to 100:200.

In an embodiment of the invention, in the second coating layer, a dry weight ratio of the inorganic filler to the second water-based heat-sealable coating is 100:20 to 100:100.

The invention also provides a flexible packaging material using above-mentioned paper material.

In an embodiment of the invention, the flexible packaging material has a fiber yield greater than 85%.

Based on the above, one or more embodiments of the invention provides a paper material and a flexible packaging material using the same. At least one surface of the paper material is coated with a first coating layer and a second coating layer, and the paper material has an air permeability greater than 45200 sec and a dyne value less than 40 dyn/cm. In addition, the paper material provided in one or more embodiments of the invention does not contain PFAS; hence, the paper material satisfies the current requirements for environmental protection and may avoid serious and irreversible adverse effects on the environment and human health. In another aspect, the paper material provided in one or more embodiments of the invention passes the repulpability test and may be possible for paper recycling, and thus back-end recyclers may process the wasted paper material more easily at lower costs to increase the waste recycling rate.

### DESCRIPTION OF THE EMBODIMENTS

Several exemplary embodiments are described in detail below to further describe the invention in details; however, these embodiments are illustrative and should not be construed as limitations in the invention.

In the invention, the range represented by "a value to another value" is a general way of representation to avoid enumerating all the values in the range one by one in the invention. Therefore, a specific numerical range covers any numerical value in the numerical range and any smaller numerical range defined by any numerical value in the specific numerical range, as if the specific numerical value and the smaller numerical value are explicitly written in the invention.

An embodiment of the invention provides a paper material and a flexible packaging material using the same. At least one surface of the paper material is coated with a first coating layer and a second coating layer, wherein the second coating layer is a pre-coating layer located between the at least one surface of the paper material and the first coating layer. The paper material may have an air permeability greater than 45200 sec and a dyne value less than 40 dyn/cm. A basis weight of the paper material is, for instance, from 30 g/m² to 200 g/m².

In this embodiment, the first coating layer includes an inorganic filler and a first water-based heat-sealable coating; in the first coating layer, a dry weight ratio of the inorganic filler to the first water-based heat-sealable coating is, for instance, 100:50 to 100:200. The first water-based heat-sealable coating may include a polyolefin dispersion, an ethylene acrylic acid copolymer, or a styrene acrylate emulsion. The second coating layer includes an inorganic filler and a second water-based heat-sealable coating; in the second coating layer, a dry weight ratio of the inorganic filler to the second water-based heat-sealable coating is, for instance, 100:20 to 100:100. The second water-based heat-sealable coating may include a polyolefin dispersion, an ethylene acrylic acid copolymer, a styrene acrylate emulsion, or polyvinyl alcohol. The inorganic filler may include calcium carbonate, kaolin, mica, talc, or bentonite, which should however not be construed as a limitation in the invention.

In this embodiment, a coating weight of the first coating layer is, for instance, 3 g/m² to 20 g/m², and a coating weight of the second coating layer is, for instance, 3 g/m² to 20 g/m². The sum of the coating weight of the first coating layer and the second coating layer is, for instance, from 6 g/m² to 30 g/m². A composition of the first coating layer and a composition of the second coating layer may be the same or different.

The "flexible packaging material" provided in the invention refers to a packaging material of which the shape may change when the contents are filled inside the packaging or are taken out from the packaging. Generally, various types of bags, boxes, sleeves, and envelops made of paper materials, aluminum foil, fiber, plastic film, and a combination thereof are considered as the flexible packaging materials, which may be used for food packaging. In the invention, the flexible packaging material is primarily made of a paper material. According to the related art, the flexible packaging materials are made of PFAS, which is a persistent, bio-accumulative, and toxic substance and thus may cause serious and irreversible adverse effects to the environment and human health. By contrast, in one or more embodiments of the invention, the paper material in the invention serves to replace the conventional PFAS to avoid such serious and irreversible adverse effects on the environment and human health.

Hereinafter, experimental examples serve to describe in detail the paper materials provided in the above embodiments and the flexible packaging materials using the paper materials. However, the following experimental examples are not intended to be construed as limitations in the invention.

### TESTING METHODS

Air permeability is measured according to TAPPI T460. This test method measures the amount of time required for a certain volume of air to pass through a test specimen. The air pressure is generated by a gravity-loaded cylinder that captures an air volume within a chamber using a liquid sealing member. The pressurized volume of air is directed to the clamping gasket ring, which holds the test specimen in place. As the inner cylinder moves downward steadily, the number of seconds, which is required for the inner cylinder to descend from the 150 mL mark to the 250 mL mark, is measured. The air passing through the test specimen escapes to the atmosphere through the holes in a downstream camping plate.

A water vapor transmission rate (WVTR) is measured according to ASTM F1249 on the conditions of temperature at 37.8 °C and relative humidity of 90%. In this method, a drying chamber is separated from a wet chamber with known temperature and humidity by a barrier material to be tested. The drying chamber and the wet chamber constitute a diffusion cell, in which a test membrane is sealed. The diffusion cell is placed in a test station where the drying chamber and the top of the membrane are purged with dry air or dry nitrogen. The water vapor diffusing through the membrane is mixed with air in the drying chamber and is carried into a pressure-modulated infrared sensor. The sensor measures the fraction of infrared energy absorbed by the water vapor and generates an electrical signal, the amplitude of which is proportional to water vapor concentration. The amplitude of the electrical signal generated by the test membrane is then compared with a signal generated by measuring a calibration membrane of a known water vapor transmission rate. This information is then applied to calculate the WVTR.

Surface energy is measured by conducting a dyne pen test (DIN ISO 8296). According to the DIN ISO 8296 standard, a method of measuring surface energy (surface tension) is to apply inks with different known surface energies (e.g., dyne pen) to a test specimen to leave about 100 mm of ink marks, and whether more than 90% of the ink marks are drawn back to form ink droplets in two seconds is observed. If so, the ink with a lower dyne level of surface energy is applied, and the same observation is performed until the ink is not drawn back and no ink droplet is formed. This is the surface energy corresponding to the test specimen.

Oil and grease resistance is evaluated according to TAPPI T 559. The TAPPI T 559 test method is also called a kit test, which involves dropping a mixture of a drop of castor oil, heptane, and toluene on a coated paper material and observing the coated paper material after 15 seconds to learn whether the coated paper material turns black. A total of twelve different mixtures are used. Based on the permeability of the mixture, the mixtures are numbered as mixtures 1 to 12, wherein the mixture 12 has the most permeability and the mixture 1 has the least permeability. The less the amount of castor oil in the mixture is, the more corrosive the mixture is. When at least a portion of the test mixture is absorbed by the coated paper material, the blackening or discoloration of the coated paper indicates "failure", and the score of the test specimen is obtained by using the mixture with the largest number (among the mixtures 1 to 12) used when the coated paper material has not "failed". This is called "Kit no.". In principle, the higher the value of Kit no. is, the better the oil and grease resistance is.

Water resistance is evaluated by conducting the TAPPI T 441 test method. In the method, a water absorption rate of a coating layer is measured by the Cobb water absorption tester. The water absorption rate (Cobb value) is defined as the amount of water absorbed by 1 square meter of paper, paperboard, or corrugated fiberboard under 1 cm of water in depth within a specific period of time (within 30 minutes). In principle, the lower the Cobb value is, the better the water resistance is.

A seal initiation temperature is measured by conducting a heat seal strength test. In the test method, coating layers of two paper materials are sealed through performing a heating process and exerting pressure (for 0.5 seconds at 300kPa). The sealed test specimen is a 15mm-wide specimen cut from the sealed paper material. The seal strength is measured according to the ASTM D1876 peel test, and the lowest temperature at which the paper specimen is broken is the seal initiation temperature.

A repulpability test is performed according to a standard method from FBA (the Fibre Box Association) to evaluate recoverability and recyclability. A paper material is repulped in a blender and a disintegrator in water at a pH of 7 (±0.5 pH) that is maintained at around 50°C. The re-pulped material is separated in a screen with 0.010-inch or smaller slots to determine a fiber yield (represented by a percentage of the amount of fiber charged). Here, the screen is a net with a number of long strips of voids. To be specific, the method of calculating the fiber yield is carried out by applying a screen with a 0.010-inch in width. The evaluation criteria of the repulpability test are: the fiber yield passing the repulpability test must be greater than 85%; if the fiber yield is lower than this value, it means that the repulpability test fails, and the coated material and fiber cannot be separated.

### PREPARING COATING COMPOSITION

Kaolin (CAPIM^{™}, acting as an inorganic filler) is added to distilled water, and the mixture is stirred at 1800 rpm for 20 minutes to 30 minutes to obtain kaolin slurry. The kaolin slurry is then mixed with a water-based heat-sealable coating and stirred at 900 rpm for 5 minutes to 10 minutes to obtain the coating composition provided in the invention.

### COATING PAPER MATERIAL

The paper material is made of a mixture of Laubholz bleached kraft pulp (LBKP) and Nadelholz bleached kraft pulp (NBKP). The paper material is coated with the coating composition and is dried to form a first coating layer. The first coating layer of the paper material is then coated with the coating composition to form a second coating layer. Tables 1 to 3 below provides the coating weight and the coating composition of the first coating layer and the second coating layer in examples 1 to 17 and comparative examples 1 to 2. At the same time, the test methods described above are performed to evaluate the properties in examples 1 to 17, and the evaluation results are listed in Tables 1 to 3 below.

In Tables 1 to 3, the coating composition refers to a dry weight ratio of the kaolin to the water-based heat-sealable coating. The water-based heat-sealable coating includes a polyolefin dispersion (trade name RHOBARR^{™} 320, referred to as "R320"), an ethylene acrylic acid copolymer (trade name Aquaseal^{™} X2221, referred to as "X2221"), a styrene acrylate emulsion (Michem^{®} Coat 95, referred to as "MC95"), or polyvinyl alcohol.

**Table 1**

| | | example 1 | example 2 | example 3 | example 4 | example 5 | example 6 | example 7 | example 8 |
|---|---|---|---|---|---|---|---|---|---|
| Second coating layer | Coating composition | kaolin: R320 =100:54 | kaolin: R320 =100:54 | kaolin: R320 =100:54 | kaolin: MC95 =100:54 | kaolin: MC95 =100:54 | kaolin: MC95 =100:54 | kaolin: X2221 =100:54 | kaolin: X2221 =100:54 |
| | Coating weight (g/m²) | 6 | 6 | 6 | 6 | 6 | 6 | 6 | 6 |
| First coating layer | Coating composition | kaolin: R320 = 100:87 | kaolin: MC95 =100:87 | kaolin: X2221 =100:87 | kaolin: R320 = 100:87 | kaolin: MC95 =100:87 | kaolin: X2221 =100:87 | kaolin: R320 = 100:87 | kaolin: X2221 =100:87 |
| | Coating weight (g/m²) | 8 | 8 | 8 | 8 | 8 | 8 | 8 | 8 |
| | Air permeability (sec) | >45200 | >45200 | >45200 | >45200 | >45200 | >45200 | >45200 | >45200 |
| | Dyne value (dyn/cm) | <30 | 36-38 | 34-36 | 30-32 | 36-38 | 32-34 | <30 | 34-36 |
| | Cobb value (30 min) g/m² | 3.4 | 2.8 | 2.6 | 2.3 | 4.8 | 1.9 | 3.2 | 2.3 |
| | Kit no. | 12 | 12 | 12 | 12 | 12 | 12 | 12 | 12 |
| | WVTR (g/m²-day) | 46.7 | 148.5 | 28.8 | 89.4 | 253.2 | 54.2 | 42.5 | 32.9 |
| | Seal initiation temperature (3bar, 0.5sec) | 140 | 170 | 120 | 140 | 200 | 120 | 140 | 120 |

**Table 2**

| | | example 9 | example 10 | example 11 | example 12 | example 13 | example 14 | example 15 | example 16 | example 17 |
|---|---|---|---|---|---|---|---|---|---|---|
| Second coating layer | Coating compositi on | PVA: kaolin =100:24 0 | PVA: kaolin =100:24 0 | PVA: kaolin =100:24 0 | PVA: kaolin =100:24 0 | PVA: kaolin =100:240 | PVA: kaolin =100:240 | PVA: kaolin =100:24 0 | PVA: kaolin =100:240 | PVA: kaolin =100:24 0 |
| | Coating weight (g/m²) | 3 | 3 | 3 | 3 | 3 | 3 | 3 | 3 | 3 |
| First coating layer | Coating compositi on | kaolin: R320 = 100:87 | kaolin: MC95 = 100:87 | kaolin: X2221 = 100:87 | kaolin: R320 = 100:50 | kaolin: R320 = 100:64 | kaolin: R320 = 100:100 | kaolin: R320 = 100:115 | kaolin: R320 = 100:137 | kaolin: R320 = 100:200 |
| | Coating weight (g/m²) | 8 | 8 | 8 | 8 | 8 | 8 | 8 | 8 | 8 |
| | Air permeabil ity (sec) | >45200 | >45200 | >45200 | >45200 | >45200 | >45200 | >45200 | >45200 | >45200 |
| | Dyne value (dyn/ cm) | <30 | 38-40 | 32-34 | 32-34 | 32-34 | <30 | <30 | <30 | <30 |
| | Cobb value (30 min) g/m² | 1.9 | 9.7 | 9.7 | 14.8 | 9.4 | 1.8 | 1.3 | 0.9 | 0.7 |
| | Kit no. | 12 | 12 | 12 | 12 | 12 | 12 | 12 | 12 | 12 |
| | WVTR (g/m²-day) | 73.1 | 180.7 | 47.5 | 81.5 | 72.7 | 117.6 | 85.2 | 117.6 | 109.6 |
| | Seal initiation temperatu re (3bar, 0.5sec) | 130 | 200 | 100 | 140 | 140 | 130 | 130 | 130 | 130 |

**Table 3**

| | | example 9 | example 11 | Comparative example 1 | Comparative example 2 |
|---|---|---|---|---|---|
| Second coating layer | Coating composition | PVA: kaolin =100:240 | PVA: kaolin =100:240 | PVA: kaolin =100:240 | PVA: kaolin =100:240 |
| | Coating weight (g/m²) | 3 | 3 | 3 | 3 |
| First coating layer | Coating composition | kaolin: R320 = 100:87 | kaolin: X2221 = 100:87 | R320 | X2221 |
| | Coating weight (g/m²) | 8 | 8 | 6 | 6 |
| | Fiber yield% (<0.25mm) | 92.2 | 92.8 | 79.9 | 77.6 |

It can be learned from Tables 1 to 2 above that the examples 1 to 17 are directed to the paper materials provided in the invention, the surface of which is coated with the first coating layer and the second coating layer. All paper materials of the examples 1 to 17 not only have the air permeability greater than 45200 sec and the dyne value less than 40 dyn/cm, but also have good air permeability, water resistance and oil and grease resistance properties without sacrificing the heat sealability, regardless of whether the composition of the first coating layer and the composition of the second coating layer are the same or different.

The repulpability of the paper material provided by the invention is further tested. From Table 3 above, it can be learned that the examples 9 and 11 are the paper materials provided in the invention coated with the first coating layer and the second coating layer, wherein the fiber yield of the examples 9 and 11 is greater than 85% and pass the repulpability test. In the comparative examples 1 and 2, the second coating layer does not contain any inorganic filler but merely include the water-based heat-sealable coating. Therefore, the fiber yield of the comparative examples 1 and 2 is less than 85% and fail the repulpability test. The experimental results show that the addition of the inorganic filler is crucial for repulpability. Because the paper material provided in the invention has high repulpability, it allows the first coating layer and the second coating layer to be separated from the paper substrate. Therefore, the recycling rate of the paper substrate is significantly improving and the paper material provided herein may be recycled and repulped.

To sum up, one or more embodiments of the invention provides the paper material and the flexible packaging material using the paper material. At least one surface of the paper material is coated with the first coating layer and the second coating layer, and the paper material has the air permeability greater than 45200 sec and the dyne value less than 40 dyn/cm, which further exhibits high gas barrier properties, water resistance properties, oil and grease resistance properties, and heat sealability. In addition, the paper material provided in one or more embodiments of the invention does not contain any PFAS and thus complies with the current requirements for environmental protection, and the serious and irreversible adverse effects on the environment and human health may be prevented. On the other hand, the paper material provided in one or more embodiments of the invention passes the repulpability test and may be possible for paper recycling, and thus back-end recyclers may process the wasted paper material more easily at lower costs to increase the waste recycling rate. Namely, the paper material provided herein may not only solves the existing issue of the difficulty in recycling the flexible packaging material, but also achieves the goal of the recyclability and the environmental protection. It is in line with the global trend in development of the green sustainability and recycling in packaging industry.

## Claims

1. A paper material having at least one surface coated with a first coating layer and a second coating layer, the paper material having an air permeability greater than 45200 sec and a dyne value less than 40 dyn/cm,
wherein the first coating layer comprises an inorganic filler and a first water-based heat-sealable coating, and the first water-based heat-sealable coating comprises a polyolefin dispersion, an ethylene acrylic acid copolymer, or a styrene acrylate emulsion;
wherein the second coating layer comprises an inorganic filler and a second water-based heat-sealable coating, and the second water-based heat-sealable coating comprises a polyolefin dispersion, an ethylene acrylic acid copolymer, a styrene acrylate emulsion, or polyvinyl alcohol.

2. The paper material according to claim 1, wherein the paper material has a fiber yield greater than 85%.

3. The paper material according to claim 1, wherein a coating weight of the first coating layer is 3 g/m² to 20 g/m².

4. The paper material according to claim 1, wherein a coating weight of the second coating layer is 3 g/m² to 20 g/m².

5. The paper material according to claim 1, wherein the sum of a coating weight of the first coating layer and the second coating layer is 6 g/m² to 30 g/m².

6. The paper material according to claim 1, wherein the second coating layer is a pre-coating layer located between the at least one surface of the paper material and the first coating layer.

7. The paper material according to claim 1, wherein a composition of the first coating layer and a composition of the second coating layer are the same or different.

8. The paper material according to claim 1, wherein a basis weight of the paper material is 30 g/m² to 200 g/m².

9. The paper material according to claim 1, wherein the inorganic filler comprises calcium carbonate, kaolin, mica, talc, or bentonite.

10. The paper material according to claim 1, wherein in the first coating layer, a dry weight ratio of the inorganic filler to the first water-based heat-sealable coating is 100:50 to 100:200.

11. The paper material according to claim 1, wherein in the second coating layer, a dry weight ratio of the inorganic filler to the second water-based heat-sealable coating is 100:20 to 100:100.

12. A flexible packaging material using the paper material according to claim 1.
